# EUROPEAN PATENT APPLICATION

(11) **EP 2 285 073 A1**
(43) Date of publication of application: **16.02.2011**
(21) Application number: 09794294.0
(22) Date of filing: 12.06.2009
(51) Int. Cl.: H04L 29/14, H04L 29/00

(54) **COMMUNICATION DEVICE, COMMUNICATION SYSTEM, COMMUNICATION PROGRAM, AND COMMUNICATION METHOD**

(30) Priority: 11.07.2008 JP 2008181080
(71) Applicant: NEC Corporation, Minato-ku Tokyo 108-8001 (JP)
(72) Inventor: TANAKA, Kazuyuki, Tokyo 108-8001 (JP)
(74) Representative: Schöniger, Franz-Josef
(86) International application number: PCT/JP2009/061152
(87) International publication number: WO 2010/004847

(57) **Abstract**

In the past, there has been such a problem that a line failure could not be quickly detected on the basis of the difference between receiving times of a plurality of pieces of information.

This communication device capable of solving the problem is provided with a control means which receives, from an opposite device connected through first and second lines, first information transmitted through the first line, and second information transmitted simultaneously with the first information through the second line, and a detection means which detects the line failure of the second line from the lapse of a first monitoring time without receiving the second information by the control means, after the reception of the first information.

## Description

### TECHNICAL FIELD

The present invention relates to a communication device, a communication system, a communication program, and a communication method.

### BACKGROUND ART

The patent document 1 discloses a computer which partitions data in a memory into pieces and transmits the pieces to an opposite computer simultaneously through a plurality of lines. The document also discloses to re-transmit the data using other lines when a line failure occurs.

The patent document 2 discloses a system wherein a terminal sends information in both a primary and a secondary gateway, and the primary gateway which receives the information transmits it to the secondary gateway. In the system, the secondary gateway judges a failure of the primary gateway based on the presence or the lack of the message from the terminal and the primary gateway.

The patent document 3 discloses a switching network which, when a failure occurs in a switching node in the network, searches an alternative pass by executing a broadcasting communication from another switching node to each switching node.
[Patent document 1] Japanese Patent Application Laid-Open No. 2007-259000
[Patent document 2] Japanese Patent Application Laid-Open No. 1999-163947
[Patent document 3] Japanese Patent Application Laid-Open No. 1996-305640

### DISCLOSURE OF THE INVENTION

### PROBLEM TO BE SOLVED

The technologies disclosed in the above-mentioned patent documents do not receive a plurality of information through a plurality of lines from the same opposite device. Accordingly, there was a problem that it cannot detect a line failure promptly based on difference of receiving time of a plurality of information. The object of the present invention is to provide a communication device, a communication system, a communication program, and a communication method for settling the above-mentioned problem.

### MEANS FOR SOLVING THE PROBLEM

An exemplary embodiment of a communication device of the present invention includes a control means which receives, from an opposite device connected through a first line and a second line, a first information transmitted through the first line and a second information transmitted simultaneously with the first information through the second line; and a detection means which detects a line failure of the second line from the laspe of a first monitoring time without receiving the second information by the control means, after the reception of the first information.

An exemplary embodiment of a computer-readable recording medium of the present invention stores a communication program, which makes the computer execute, a controlling process where the computer receives, from an opposite device connected through a first line and a second line, a first information transmitted through the first line, and a second information transmitted simultaneously with the first information through the second line; and a detecting process where the computer detects a line failure of the second line from the laspe of a first monitoring time without receiving the second information by the computer, after the reception of the first information.

In an exemplary embodiment of a communication method of the present invention, a computer receives, from an opposite device connected to the computer through a first line and a second line, a first information transmitted through the first line and a second information transmitted simultaneously with the first information through the second line, and detects a line failure of the second line from the laspe of a first monitoring time without receiving the second information by the computer, after the reception of the first information.

### EFFECT OF THE INVENTION

The present invention detects a line failure promptly.

### DESCRIPTION OF THE DRAWINGS

Fig. 1 is a configuration diagram of a communication system 10 of the first exemplary embodiment.
Fig. 2 is a diagram showing a detailed example of the data and others which flows through the first line 41.
Fig. 3 is an operation flowchart of a transmitting process of a control means 22, and a first monitoring process and a second monitoring process of a detection means 21.
Fig. 4 is an operation flowchart of a re-transmitting process of the control means 22.
Fig. 5 indicates a basic configuration of a communication device 20 of the present invention.
Fig. 6 indicates a configuration of an i-th data group 3i.

### DESCRIPTION OF THE CODE

- 10: communication system
- 20: communication device
- 21: detection means
- 22: control means
- 23: memory
- 27: first monitoring time
- 28: second monitoring time
- 29: communication program
- 30: huge data
- 31: first data group
- 3i: i-th data group
- 3n: n-th data group
- 41: first line
- 42: second line
- 4i: i-th line
- 4n: n-th line
- 51: first completion notice
- 5i: i-th completion notice
- 6i: i-th transmission request
- 70: opposite device
- 71: transmission and reception means
- 81: first confirmation response
- 8i: i-th confirmation response
- 91: first information
- 92: second information
- 9i: i-th information
- A0: recording medium

### MOST PREFERED MODE FOR CARRYING OUT THE INVENTION

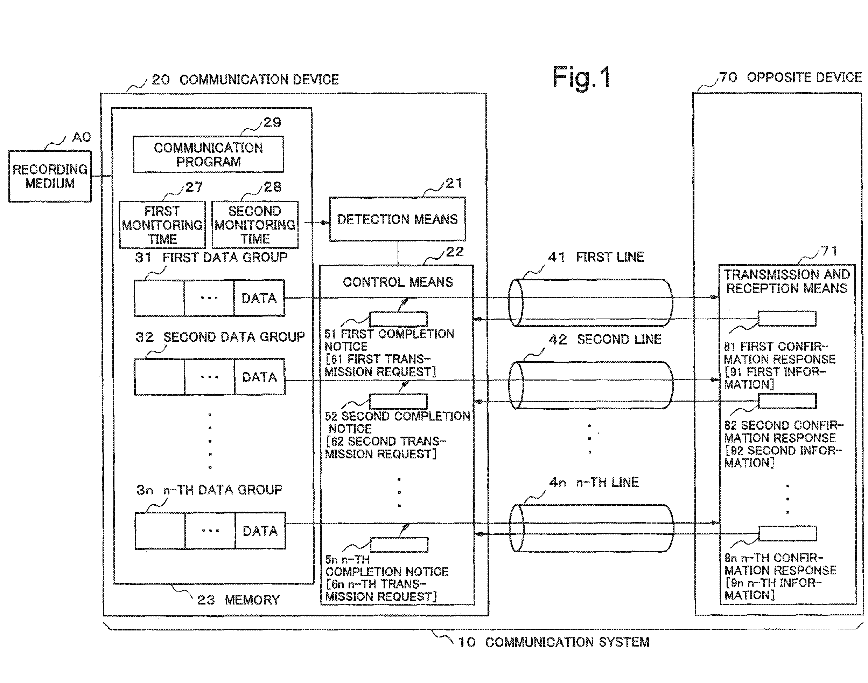

Fig. 1 is the configuration diagram of a communication system 10 of the first exemplary embodiment. The communication system 10 includes a communication device 20 and an opposite device 70. The communication device 20 and the opposite device 70 are connected mutually with a plurality ofi-th line 4i (where i=1-n; for example, first line 41 to n-th line 4n). A plurality of i-th line 4i usually have the same communication characteristics (i.e. transmission delay time, bandwidth, and others).

The communication device 20 includes a control means 22 which executes a transmission and reception with an opposite device 70, a detection means 21 which detects a failure of the i-th line 4i, and a memory 23. The memory 23 stores data that are transmitted to the opposite device 70, and a first monitoring time 27 and a second monitoring time 28 that are operation parameters for the detection means 21.

The data that are transmitted to the opposite device 70 are groups of partitioned pieces, with fixed size, of large data (huge data 30) such as a failure analyses data or an image data. The control means 22 transmits each group (ex. the first data group 31 to the n-th data group 3n) in parallel through a plurality of i-th line 4i to realize a high-speed transmission. Accordingly, the number of the groups is usually the same as the number (in Fig. 1, it is n) of the i-th line 4i. In addition, each group usually includes almost the same number of pieces of data with the same size.

The detection means 21 and the control means 22 function when a processor of the communication device 20, which is a computer, reads and executes a communication program 29 stored in the memory 23. The equivalent functions can be realized by hardware. Further, in advance of the execution, the communication program 29 can be loaded into the memory 23 from a computer-readable recording medium A0.

The opposite device 70 includes the communication device 20 and a transmission and reception means 71 which executes transmission and reception. The transmission and reception means 71 functions when a processor of the opposite device 70, which is a computer, reads and executes a program stored in a main memory device, which is not shown in the diagram. The equivalent functions can be realized by hardware.

The control means 22 of the communication device 20 transmits all data of each i-th data group 3i to the opposite device 70 respectively through each i-th line 4i (where i=1-n, and the description is omitted in the followings). After all the data of all the i-th data group 3i have been transmitted, the control means 22 simultaneously transmits all the i-th completion notices 5i (also referred to as the i-th transmission request 6i), and notifies the opposite device 70 of the completion of transmission. When the transmission and reception means 71 of the opposite device 70 receives each i-th completion notice 5i, it sends the i-th confirmation response 8i (also referred to as an i-th information 9i) respectively.

When the transmission and reception means 71 receives the i-th completion notice 5i respectively, it promptly sends the i-th confirmation response 8i. Accordingly, all the i-th confirmation responses 8i will be transmitted simultaneously from the opposite device 70.

Here, "simultaneously" is an expression which allows the difference of time such as processing time for executing a transmitting and receiving process sequentially for each i-th line 4i by the control means 22 and the transmission and reception means 71, or a difference of transmission delay time of each i-th line 4i. The processing time includes a processing time of a processor, an input/output processing time, and a waiting time for a line to become available when the line is shared with other devices, or the like.

The communication device 20 of the present invention detects a failure of the i-th line 4i promptly based on difference of receiving time of each i-th confirmation response 8i which is received through each i-th line 4i.

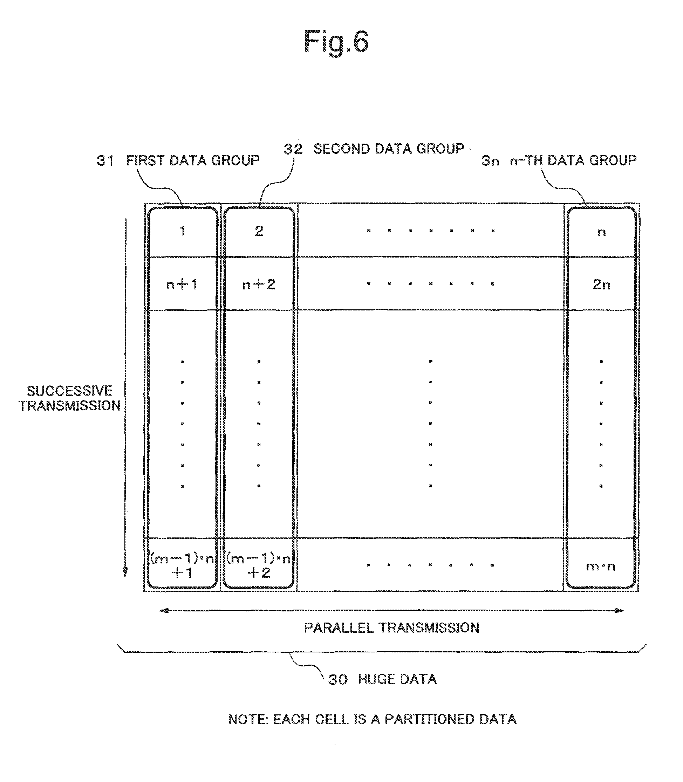

Fig. 6 indicates a configuration of the i-th data group 3i. For example, at first, the control means 22 reads the huge data 30 from a file, which is not shown in the diagram, to the memory 23. The control means 22 partitions the data into fixed-size pieces of data and assigns a sequence number on each data. In Fig. 6, the control means 22 partitions the huge data 30, and assigns sequence number 1,2, to m*n (product of m and n) on each data.

After the partition, the control means 22 composes the i-th data group 3i by grouping m pieces of data that are separated in n of the sequence number (i.e. data with sequence number i, n+i, 2n+i,..., and (m-1)xn+i). In Fig.6, the i-th data group 3i is an i-th column from the left. For example, a first data group 31 is a first column from the left. The control means 22 transmits n count of the i-th data group 3i to the opposite device 70 in parallel through the i-th line 4i respectively. In each i-th data group 3i, the control means 22 for example serializes each piece of data in an order from the smallest number of the sequence number and transmits them.

Alternatively, after the huge data 30 is partitioned, the control means 22 may transmit the pieces of data with the sequence numbers 1 to n through the first line 41 to n-th line 4n respectively, and then sequentially transmit in an order of the smallest number of the sequence number using lines which have completed the transmission of the data. In this case, the group of the data that are transmitted through the i-th line 4i consequently compose the i-th data group 3i.

Before transmitting the data, the control means 22 attaches the sequence number to each piece of data and then transmits them. For example, the control means 22 may store the sequence number of the piece of data in a transmission header of each piece of data, and transmit them. When the transmission and reception means 71 of the opposite device 70 received each piece of data, it judges the position of the piece of data in the huge data 30 based on the attached sequence number, and restores the huge data 30 in the main memory device which is not shown in the diagram.

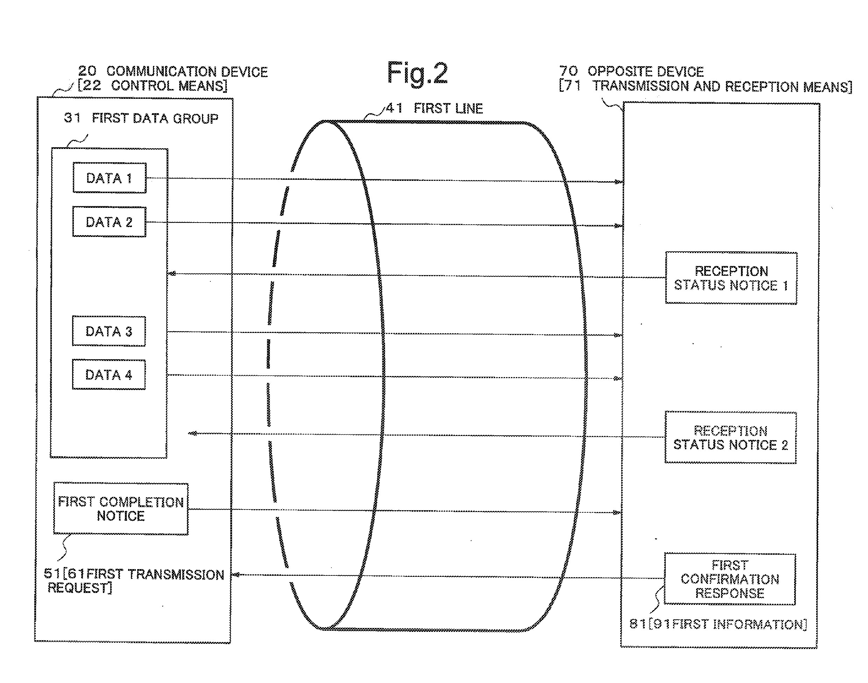

Fig. 2 is the diagram showing a detailed example of the data which flows through the first line 41 and others. Fig. 2 can also be applied respectively to each i-th line 4i.

Here, for example, the first data group 31 is composed of four pieces of data from a data 1 to a data 4. In addition, for example, it is supposed that the control means 22 and the transmission and reception means 71 execute a delivery confirmation for every two data.

First, the control means 22 transmits the data 1 to the data 4 to the transmission and reception means 71 successively. When the transmission and reception means 71 receives the data 1 and the data 2, it notifies a reception completion of the data 1 and the data 2 to the control means 22, by sending a reception status notice 1. Further, when the transmission and reception means 71 receives the data 3 and the data 4 after the reception of the data 1 and the data 2, it notifies the reception completion of the data 1 to the data 4 to the control means 22, by sending a reception status notice 2.

When the control means 22 receives the reception status notice 1, it records that the delivery of the data 1 and the data 2 are completed. When the control means 22 receives the reception status notice 2, it records that the delivery of the data 1 to the data 4 are completed.

When the transmission of the data 1 to the data 4 have completed, the control means 22 transmits a first completion notice 51. When the transmission and reception means 71 receives the first completion notice 51, it sends a first confirmation response 81.

The control means 22 and the transmission and reception means 71 may execute the delivery confirmation for a different count of pieces of data, or it may execute based on other reference values (ex. for each prefixed interval).

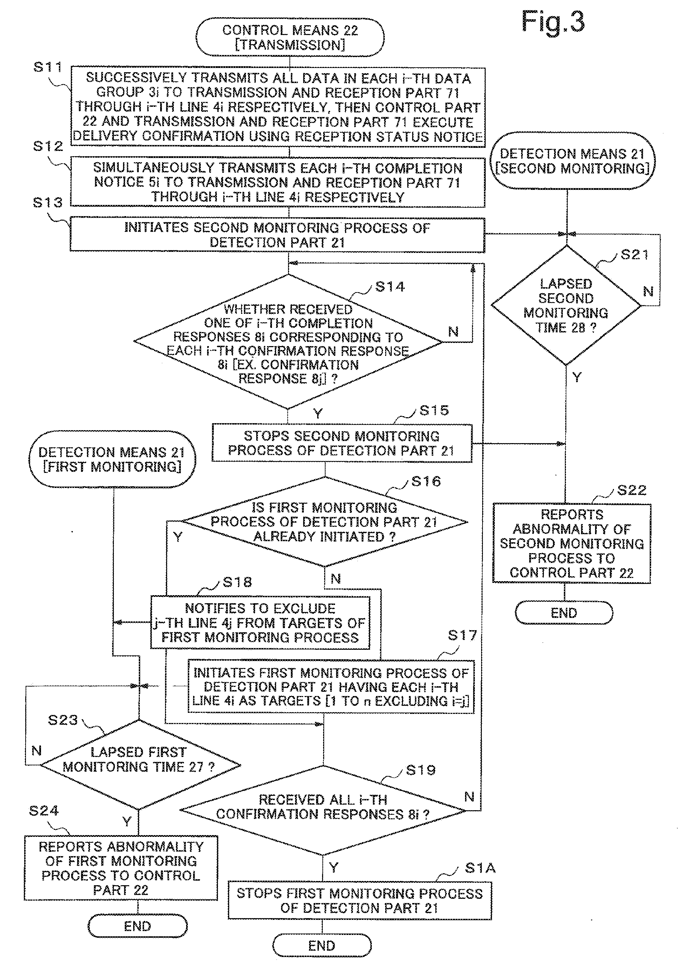

Fig. 3 is the operation flowchart of a transmitting process of the control means 22, and a first monitoring process and a second monitoring process of the detection means 21.

First, the control means 22 accepts a data transmission request from an application that is not shown in the flowchart. The control means 22 successively transmits all data in each i-th data group 3i to the transmission and reception means 71 through the i-th line 4i respectively. At that time, the control means 22 and the transmission and reception means 71 execute the delivery confirmation using the reception status notice (S11).

When the transmission of all data in all the i-th data group 3i have been completed, the control means 22 simultaneously transmits each i-th completion notice 5i to the transmission and reception means 71 through the i-th line 4i respectively (S 12). After that, the control means 22 initiates the second monitoring process of the detection means 21 (S13).

Second monitoring process is dedicated for monitoring whether it could receive one of the i-th confirmation responses 8i within a prefixed time (second monitoring time 28) after the transmission of all the i-th completion notices 5i. Second monitoring process is a process which monitors interval from the transmission to the reception, and is usually called a response time monitoring.

After the second monitoring process is initiated, the control means 22 waits for the reception of one of each i-th confirmation response 8i corresponding to each i-th completion notice 5i (N in S14). When the control means 22 can receive one of the i-th confirmation response 8i (ex. j-th confirmation response 8j) (Y in S14), it stops the second monitoring process of the detection means 21 (S15).

At that time, if the first monitoring process of the detection means 21 is not already initiated (N in S16), the control means 22 initiates the first monitoring process of the detection means 21 having each i-th line 4i (1 to n excluding i=j) as targets (S17). If the first monitoring process of the detection means 21 is already initiated (Y in S 16), the control means 22 notifies to the detection means 21 to exclude j-th line 4j from the targets of the first monitoring process (S18).

First monitoring process is dedicated for monitoring whether it received all the i-th confirmation responses 8i (1 to n except i=j) in a prefixed time (first monitoring time 27) after a first confirmation response (j-th confirmation response 8j, for example) is received.

When all the i-th confirmation responses 8i (Y in S19) are received, the control means 22 stops the first monitoring process of the detection means 21 (S1A) and normally finishes the transmission process.

When the second monitoring process is initiated by the control means 22, the detection means 21 waits (N in S21) until lapse of the second monitoring time 28. During that time, when a stop direction of the second monitoring process comes from the control means 22, the detection means 21 ends the second monitoring process. When the second monitoring time 28 lapses (Y in S21) without stopped by the control means 22, the detection means 21 reports an abnormality of the second monitoring process to the control means 22 (S22). At that time, the detection means 21 reports that all the i-th line 4i are abnormal.

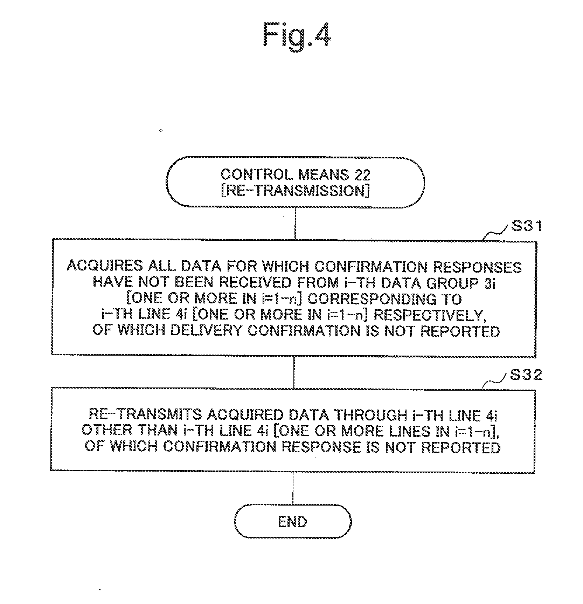

When the first monitoring process is initiated by the control means 22, the detection means 21 waits (N in S23) until lapse of the first monitoring time 27. During that time, when a stop direction of the first monitoring process comes from the control means 22, the detection means 21 ends the first monitoring process. When the first monitoring time 27 lapses (Y in S23) without stopped by the control means 22, the detection means 21 reports an abnormality of the first monitoring process to the control means 22 (S24). At that time, the detection means 21 reports all the i-th line 4i (one or more lines among i=1 to n) that are remained as monitoring targets, to which the confirmation responses are not be received. When the control means 22 receives the report, it executes the re-transmitting process which is shown in Fig. 4.

The first monitoring time 27, which is used for the first monitoring process, can be set to a smaller value than the second monitoring time 28, which is used for the second monitoring process. That is, abnormality detection by the first monitoring process can be done earlier than that by the second monitoring process. That is because the second monitoring time 28 has to be set to a value larger than the aggregate value of both a time for the i-th completion notice 5i / the i-th confirmation response 8i to make a round trip through the i-th line 4i, and a time for the reply processing in the opposite device 70. On the other hand, the first monitoring time 27 may be large enough if it is just larger than the difference of the aggregate values for respective i-th line 4i.

Fig. 4 is the operation flowchart of the re-transmitting process of the control means 22. When an abnormality is detected by the first monitoring process of the detection means 21, this process is initiated.

The control means 22 acquires all data for which the confirmation responses have not been received from the i-th data group 3i (one or more among i=1-n) corresponding to the i-th line 4i (one or more in i=1-n) respectively, of which the delivery confirmation is not reported (S31).

The control means 22 re-transmits the acquired data through the i-th line 4i other than the i-th line 4i (one or more lines in i=1-n), of which the confirmation response is not reported (S32).

The first effect of the exemplary embodiment is that the communication device 20 is able to detect failures of the lines promptly. That is because it can detect an abnormality by the first monitoring process when one of the lines is normal. As mentioned above, it can set so that the first monitoring time 27 is smaller than the second monitoring time 28.

The second effect of the exemplary embodiment is to be able to avoid failures of lines during a re-transmission. That is because; it can re-transmit using lines through which confirmation responses are received.

In this exemplary embodiment, a re-transmission which is shown in Fig. 4 is not necessarily required. When the communication device 20 detects failures of lines, it may only notify to application programs or to administrators. That is, it may be composed so that the application programs or administrators take necessary process after the notification.

In addition, the delivery confirmation illustrated in Fig. 2 is not indispensable. The communication device 20 which detected a failure of the i-th line 4i may re-transmit all data of the i-th data group 3i.

In a second exemplary embodiment of the present invention, the control means 22 does not transmit the completion notice to respective lines. The control means 22 transmits the completion notice to one of the lines. For example, the control means 22 transmits only a first completion notice 51 to the first line 41. The transmission and reception means 71, which received the notice, transmits the i-th confirmation response 8i through each i-th line 4i respectively. Others are the same as the first exemplary embodiment.

The effect of the exemplary embodiment is that a bandwidth consumed by the completion notice is narrowed for all lines. This is because; only one completion notice is transmitted.

In the third exemplary embodiment of the present invention, the transmission and reception means 71 transmits the confirmation response to the communication device 20 based on its own judgment on conditions instead of transmitting the confirmation response as a response to the completion notice. It can use conditions such as a start up of the opposite device 70, a start up of an application in the opposite device 70, and a periodic interval. Others are the same as the first exemplary embodiment.

The effect of the exemplary embodiment is to be able to detect an abnormality of the line even before a data transmission. That is because; even if the communication device 20 does not transmit the completion notice, the opposite device 70 transmits a confirmation response.

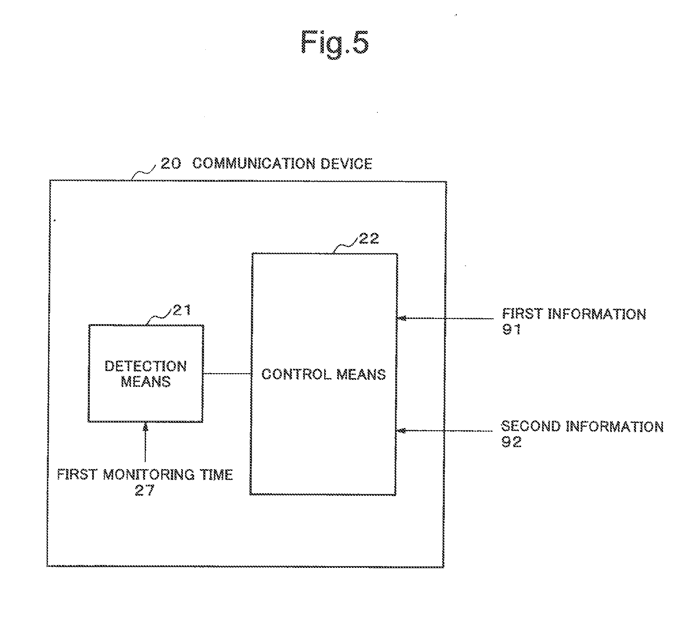

Fig. 5 indicates the basic configuration of the communication device 20 of the present invention. The communication device 20 has the control means 22 which receives, from an opposite device 70 connected through a first line 41 and a second line 42, a first information 91 transmitted through the first line 41, and a second information 92 transmitted simultaneously with the first information 91 through the second line 42. Moreover, the communication device 20 has the detection means 21 which detects a line failure of the second line 42 from the laspe of a first monitoring time 27 without receiving the second information 92 by the control means 22, after the reception of the first information 91.

As are described above, it has described the present invention with reference to the exemplary embodiments. While having described the present application of the invention referring to the exemplary embodiments, the invention of the present application is not limited to the above mentioned exemplary embodiments. It is to be understood that to the configurations and details of the invention of the present application, various changes can be made within the scope of the invention of the present application by those skilled in the arts.

This application is based upon and claims the benefit of priority from Japanese Patent Application No. 2008-181080, filed on July 11th, 2008, the contents of which are incorporated herein by the reference in their entirety.

## Claims

1. A communication device, comprising:
a control means which receives, from an opposite device connected through a first line and a second line, a first information transmitted through the first line and a second information transmitted simultaneously with the first information through the second line; and
a detection means which detects a line failure of the second line from the laspe of a first monitoring time without receiving the second information by the control means, after the reception of the first information.

2. The communication device according to claim 1, comprising:
the control means which transmits a transmission request for the first and the second information to the opposite device.

3. The communication device according to claim 2, comprising:
the control means which transmits the transmission request (first transmission request) for the first information through the first line and simultaneously transmits the transmission request (second transmission request) for the second information through the second line.

4. The communication device according to claim 3, **characterized by** comprising the detection means which also detects a line failure of the second line when not receiving the second information within a second monitoring time after transmitting the second transmission request, wherein the first monitoring time is smaller than the second monitoring time.

5. The communication device according to claim 3 or 4, wherein the control means which confirms, after transmitting a plurality of data (first data group) to the opposite device through the first line, delivery of data in the first data group by receiving a reception notice from the opposite device and
confirms, after transmitting a plurality of data (second data group) to the opposite device in parallel with the first data group through the second line, delivery of data in the second data group by receiving the reception notice from the opposite device, wherein the control means is **characterized by**
transmitting the first and the second transmission request after transmitting the first and the second data group, and
re-transmitting through the first line, the data, among the second data group, of which the delivery confirmation is not made in a case when the detection means detects a line failure of the second line.

6. The communication device according to claim 5 comprising:
the control means which partitions a huge data into the data of fixed-size and composes the first data group and the second data group.

7. A communication system comprising:
the communication devices according to one of claims 1 to 6; and
the opposite device.

8. A computer-readable recording medium which stores a communication program, which makes a computer execute,
a controlling process where the computer receives, from an opposite device connected through a first line and a second line, a first information transmitted through the first line, and a second information transmitted simultaneously with the first information through the second line; and
a detecting process where the computer detects a line failure of the second line from the laspe of a first monitoring time without receiving the second information by the computer, after the reception of the first information.

9. The computer-readable recording medium according to claim 8 which stores the communication program which makes the computer execute the controlling process where the computer transmits a transmission request for the first and the second information to the opposite device.

10. The computer-readable recording medium according to claim 9 which stores the communication program which makes the computer execute the controlling process where the computer simultaneously transmits both the transmission request (first transmission request) for the first notice through the first line, and the transmission request (second transmission request) for the second information through the second line.

11. The computer-readable recording medium according to claim 10 which stores the communication program which makes the computer execute the detecting process where the computer also detects a line failure of the second line by not receiving the second information in a second monitoring time after transmitting the second transmission request, wherein the first monitoring time is smaller than the second monitoring time.

12. The computer-readable recording medium according to claims 10 or 11 which stores the communication program, which makes the computer
during the controlling process where the computer confirms, after transmitting a plurality of data (first data group) to the opposite device through the first line, delivery of data in the first data group by receiving a reception notice from the opposite device and, confirms, after transmitting a plurality of data(second data group) to the opposite device in parallel with the first data group through the second line, delivery of data in the second data group by receiving the reception notice from the opposite device,
transmit the first and the second transmission request after transmitting the first and the second data group, and
re-transmit through the first line, the data, among the second data group, of which the delivery confirmation is not made in a case when the detection means detects a line failure of the second line.

13. The computer-readable recording medium according to claim 12 which stores the communication program which makes the computer execute the controlling process where the computer
partitions a huge data into the data of fixed-size, and
composes the first data group and the second data group.

14. A communication method where a computer
receives, from an opposite device connected to the computer through a first line and a second line, a first information transmitted through the first line and a second information transmitted simultaneously with the first information through the second line, and
detects a line failure of the second line from the laspe of a first monitoring time without receiving the second information by the computer, after the reception of the first information.

15. The communication method according to claim 14, wherein
the computer transmits a transmission request for the first and the second information to the opposite device.

16. The communication method according to claim 15, wherein
the computer simultaneously transmits the transmission request (first transmission request) for the first notice through the first line, and the transmission request (second transmission request) for the second information through the second line.
